# EUROPÄISCHE PATENTSCHRIFT

(11) **EP 0 597 325 B1**
(45) Veröffentlichungstag und Bekanntmachung des Hinweises auf die Patenterteilung: **28.05.1997**
(21) Anmeldenummer: 93117451.0
(22) Anmeldetag: 28.10.1993
(51) Int. Cl.: F02C 7/143

(54) **Verfahren zur Zwischenkühlung eines Turboverdichter**
Method of compressor intercooling
Méthode de refroidissement intermédiaire d'un compresseur

(30) Priorität: 07.11.1992 DE 4237664
(43) Veröffentlichungstag der Anmeldung: 18.05.1994
(73) Patentinhaber: ASEA BROWN BOVERI AG, 5400 Baden (CH)
(72) Erfinder: Frutschi, Hans Ulrich, CH-5223 Riniken (CH)

(56) Entgegenhaltungen:
- EP-A- 0 516 995
- FR-A- 1 568 871
- FR-A- 2 313 581
- GB-A- 2 227 796
- PATENT ABSTRACTS OF JAPAN vol. 016, no. 157 (M-1236)16. April 1992 & JP-A-40 008 828 (MITSUI ENG. & SHIPBUILDING CO.LTD.) 13. Januar 1992
- PATENT ABSTRACTS OF JAPAN vol. 9, no. 135 (M-386)(1858) 11. Juni 1985 & JP-A-60 017 232 (OSAKA GAS K.K.)

## Beschreibung

### Technisches Gebiet

Die vorliegende Erfindung betrifft ein Verfahren zum Betrieb eines Turboverdichters gemäß dem Oberbegriff des Patentanspruchs 1. Ferner betrifft sie auch eine Vorrichtung zur Durchführung dieses Verfahrens gemäß dem Oberbegriff des Anspruchs 5.

### Stand der Technik

Gasturbinen mit hohem Druckverhältnis kommen in neuerer Zeit auch für stationäre Anwendungen zum Einsatz. Sie werden vorteilhafterweise mit einer Zwischenkühlung bei der Verdichtung ausgerüstet, um auf diese Weise zusätzliche Verbesserungen des Leistungsverhaltens und des Wirkungsgrades zu erreichen. Dies wird in bekannter Weise dadurch erreicht, daß die aus der Verdichtungsarbeit resultierende Austrittstemperatur der verdichteten Verbrennungsluft in dem Kühler vermindert wird. Zu hohe Verdichteraustrittstemperaturen bereiten nämlich Probleme bei der Kühlung der Gasturbine sowie hinsichtlich der umweltschädlichen NOₓ-Emissionen.

Andererseits hängt die Wirksamkeit des vorgesehenen Kühlers davon ab, auf welches Temperaturniveau die ihm zugeführten Verbrennungsluft herabgekühlt werden kann. Dieses Temperaturniveau richtet sich in erster Linie nach dem zur Verfügung stehenden Kühlmedium. Als Kühlmedium wird im allgemeinen Wasser bzw. Kondensat verwendet, welches in der Regel mit dem Kühler einen geschlossenen Kühlkreislauf bildet.

Häufig wird die Schaffung einer künstlichen Wärmesenke erforderlich, um eine ausreichende Temperaturabsenkung der Verbrennungsluft zu erreichen. Eine solche künstliche Wärmesenke kann ein Kühlturm oder ein Konvektionsluftkühler sein. Bekannterweise steht nämlich Kühlwasser von ausreichender Menge und Qualität nur in den seltensten Fällen zur Verfügung.

Da aber auch in Kühltürmen, welche nach dem Verdunstungsprinzip arbeiten, oder in Luftkühlern, bei denen ein konvektiver Wärmeübergang stattfindet, nur eine träge Wärmeübertragung an die Umgebung erfolgt, sind entsprechend große Bauwerke erforderlich. Für derart große Bauwerke fehlt in aller Regel am Aufstellungsort einer Gasturbine der erforderliche Platz. Außerdem ist für Konvektionskühler sowie für kompakte, zwangsbelüftete Verdunstungskühler die Versorgung mit elektrischer Energie zum Antrieb der hierbei benötigten Ventilatoren erforderlich.

Zur Lösung dieses grundsätzlichen Problems sind Maßnahmen für eine sehr kompakte Wärmeübertragung an die Umgebung gefunden worden, bei welchen an Stelle einer trägen Verdunstung, nämlich an Stelle der Verdampfung unter Partialdruck, eine spontane Verdampfung von heißem Druckwasser erfolgt, z.B. im Flashverfahren.

So kann beispielsweise im Zwischenkühler einer Gasturbine beziehungsweise eines Verdichters Heißwasser von z.B. 200°C bei einem Druck erzeugt werden, welcher oberhalb des jeweiligen Sättigungsdruckes, hier z.B. 16 bar, liegt.

Das auf diese Weise erhitzte Wasser wird auf Umgebungsdruck entspannt, wobei eine spontane Verdampfung einer Teilwassermenge stattfindet. Dabei verliert das heiße Druckwasser soviel an Wärmeenergie, wie sein Wärmeinhalt über jenem von Wasser mit einer Temperatur von 100°C liegt. Selbstverständlich muß die Menge an verdampftem Wasser durch entsprechendes Zusatzwasser ersetzt werden.

Aus EP-A-0 516 995 geht eine kombinierte Gas/Dampf-Kraftwerksanlage hervor, welche im wesentlichen aus einer fossil befeuerten Gasturbogruppe und aus einem Dampfkreislauf mit einem dazwischen geschalteten Abhitzedampferzeuger besteht. Der Betrieb des zur Gasturbogruppe gehörigen Verdichters ist durch einen Zwischenkühler erweitert, der zwischen zwei Verdichterstufen angeordnet ist, wobei als Kühlmedium Wasser eingesetzt wird. Dabei erhitzt sich dieses Wasser auf eine Temperatur grösser 100°C bei einem Druck oberhalb seines Sättigungsdruckes. Durch die anschliessende Entspannung wird das hierdurch verdampfende Wasser durch Zusatzwasser ersetzt, wobei diese Entspannung mit einhergehender Ausdampfung in wenigsten zwei Stufen erfolgt.

Von Nachteil ist bei einer derartigen Kühleinrichtung die Tatsache, daß aufgrund des Umgebungsdruckes von ca. 1 bar das Wasser nur bis auf etwa 100° C abgekühlt werden kann.

Ausgehend von diesem Stand der Technik ist es daher Aufgabe der Erfindung, ein Verfahren der eingangs genannten Art anzugeben sowie eine Vorrichtung zur Durchführung dieses Verfahrens, um eine weitergehende Temperaturabsenkung des erhitzten Kühlwassers, nämlich unter 100°C zu erreichen.

### Darstellung der Erfindung

Diese Aufgabe wird erfindungsgemäß durch die kennzeichnenden Merkmale des Patentanspruchs 1 hinsichtlich des Verfahrens sowie durch die kennzeichnenden Merkmale des Patentanspruchs 5 bezüglich der hierzu dienenden Vorrichtung gelöst.

Gemäß einer bevorzugten Ausführungsform des erfindungsgemäßen Verfahrens kann vorgesehen sein, daß das erhitzte Wasser in einer ersten Stufe auf einen Druck entspannt wird, der größer als der Umgebungsdruck ist. Dabei wird das ausdampfende Wasser jeweils zur Einspeisung in die Treibdüse eines Ejektors benutzt, welcher in einem hierzu vorgesehenen Gefäß einen Druck erzeugt, der unter dem Umgebungsdruck liegt. Die aus der ersten Stufe herrührende Restmenge des erhitzten Wasser wird in dem genannten Gefäß auf den dort vorherrschenden Unterdruck entspannt.

Auf diese Weise kann eine deutlich stärkere Temperaturabsenkung, nämlich unter 100 °C erreicht werden, da der in dem Ausdampfungsgefäß herrschende Unterdruck deutlich unter Umgebungsdruck liegt.

Entsprechend einer vorteilhaften Ausgestaltung der Erfindung kann ferner die Erhitzung des Kühlwassers, die vor der Entspannung stattfindet, in einem separaten Wärmetauscher erfolgen, welcher fremd beheizt ist, z. B. durch das Abgas der zugehörigen Gasturbine.

In zweckmäßiger Weiterbildung der Erfindung ist ferner vorgesehen, daß der dem Ejektor entströmende Abdampf kondensiert wird und als Zusatzwasser verwendet wird, d.h. als Ersatz für die ausgedampfte Teilwassermenge.

Eine weitere vorteilhafte Ausgestaltung der Erfindung sieht vor, daß der dem Ejektor entströmende Abdampf dem Abgas der Gasturbine zugemischt wird.

Schließlich kann auch in zweckmäßiger Weiterbildung der Erfindung vorgesehen sein, daß die Entspannung des heißen Kühlwassers auf ein solches Druckniveau erfolgt, welches gestattet, den dabei entstehenden Dampf in den Gasturbinenprozeß einzuspeisen.

Eine zur Durchführung dieses Verfahrens vorgesehene bekannte Vorrichtung besitzt einen Turboverdichter mit wenigstens zwei Verdichterstufen, einen mit Wasser als Kühlmedium beaufschlagten Kühler sowie wenigstens ein erstes Ausdampfgefäß für eine erste Entspannung des zur Kühlung benutzten Wassers.

Zur Lösung der der Erfindung zugrundeliegenden Aufgabe ist erfindungsgemäß ein zweites Ausdampfgefäß vorgesehen, welches der Entspannung des restlichen Kühlwassers dient.

In vorteilhafter Weiterbildung der erfindungsgemäßen Vorrichtung geschieht die Entspannungsverdampfung im Innern eines Kühlturms, wobei das Restwasser durch Verdunstung oder konvektiv in konventioneller Weise weitergekühlt wird.

Diese und weitere vorteilhafte Ausgestaltungen der Erfindung sind Gegenstand der Unteransprüche.

### Kurze Beschreibung der Zeichnung

Anhand eines in der Zeichnung dargestellten Ausführungsbeispiels sollen vorteilhafte Ausgestaltungen und Verbesserungen sowie besondere Vorteile der Erfindung näher erläutert und beschrieben werden.

Es zeigen:
- Figur 1: das Schaltschema einer Gasturbogruppe mit einer erfindungsgemäßen Vorrichtung mit zwei Ausdampfgefäßen
- Figur 2: das Schaltschema einer Gasturbogruppe mit einer erfindungsgemäßen Vorrichtung mit vier Ausdampfgefäßen
- Figur 3: einen Verdunstungskühler, wie er bei der erfindungsgemäßen Vorrichtung zum Einsatz kommen kann.

### Wege zur Ausführung der Erfindung

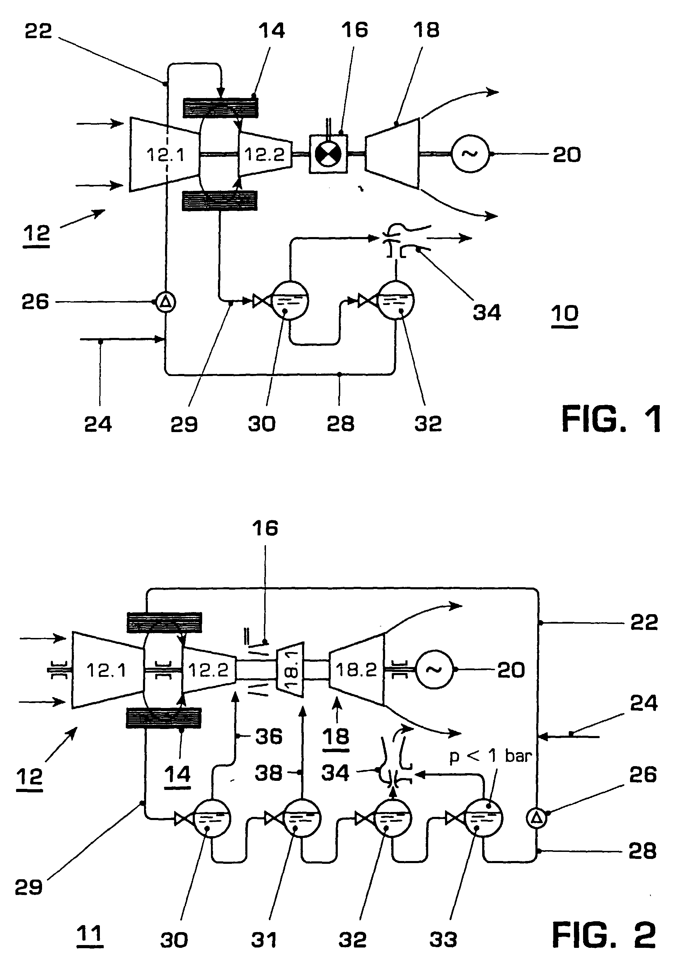

In Figur 1 ist das Schaltschema einer Gasturbogruppe 10, bestehend aus einem zweistufigen Verdichter 12, einem Kühler 14, einer Brennkammer 16, einer Gasturbine 18 und einem Generator 20 dargestellt. Der Kühler 14 für den zweistufigen Verdichter 12 ist als Zwischenkühler zwischen die erste Verdichterstufe 12.1 und die zweite Verdichterstufe 12.2 geschaltet und wird über eine Leitung 22 mit Wasser als Kühlmedium beaufschlagt. Das durch Verdampfung verlorene Wasser wird über eine Leitung 24 aus einer nicht näher definierten Quelle laufend ersetzt. Dabei dient eine Förderpumpe 26 zur kontinuierlichen Bereitstellung des Kühlwassers.

Das zur Kühlung der verdichteten Verbrennungsluft im Kühler 14 mit deren Abwärme beaufschlagte Kühlwasser wird über eine Leitung 29 einem ersten Ausdampfgefäß 30 zugeleitet, in welchem ein Druckniveau vorherrscht, welches über dem Umgebungsdruck liegt. Bei der Entspannung auf diesen Druck dampft ein Teil des heißen Kühlwassers aus. Die Restmenge des heißen Kühlwassers wird einem zweiten Ausdampfgefäß 32 zugeleitet, welches auf einem Druckniveau unterhalb des Umgebungsdrucks liegt, so daß wiederum ein Teil davon verdampft und die verbleibende Restwassermenge auf ein Temperaturniveau unter 100°C abkühlt.

Der in dem ersten Ausdampfgefäß 30 erzeugte Dampf wird einer Treibdüse eines Ejektors 34 zugeführt, der mit dem zweiten Ausdampfgefäß 32 verbunden ist und unter zu Hilfenahme des Dampfes aus dem ersten Ausdampfgefäß 30 den Innenraum des zweiten Ausdampfgefäßes 32 auf das bereits erwähnte Unterdruckniveau evakuiert. Der aus dem Ejektor abströmende Dampf kann beispielsweise entsprechend dem in Fig. 1 gezeigten Pfeil dem Abgasstrom der Gasturbine 18 zugemischt werden.

In Fig. 2 ist ebenfalls ein Schaltschema einer Gasturbogruppe 11 gezeigt, das weitgehend die gleichen Komponenten, wie in Fig. 1 gezeigt, aufweist. Dementsprechend sind gleiche Komponenten mit gleichen Bezugsziffern versehen. Hierfür gelten auch die entsprechenden Erläuterungen wie zu Fig. 1.

Unterschiedlich bei der Gasturbogruppe 11 gegenüber der in Fig. 1 gezeigten Gasturbogruppe 10 ist zunächst die verwendete Gasturbine 18, die zweistufig ausgeführt ist und eine erste Hochdruckstufe 18.1 und eine zweite Niederdruckstufe 18.2 aufweist.

Ein weiterer Unterschied gegenüber der Anordnung gemäß Fig. 1 besteht darin, daß insgesamt vier Ausdampfgefäße 30, 31, 32, 33 vorgesehen sind. Wie auch aus Fig. 1 bekannt ist, wird der zur Kühlung der verdichteten Verbrennungsluft vorgesehene Kühler über eine Leitung 22 mit Wasser als Kühlmedium beaufschlagt. Das durch die Abwärme der verdichteten Verbrennungsluft erhitzte Kühlwasser gelangt über eine Leitung 29 zu dem ersten Ausdampfgefäß 30, welches ein solches Druckniveau aufweist, daß nur ein geringer Teil des unter einem höheren Druck stehenden zugeführten Kühlwassers verdampft.

Der aus der Entspannung auf den im Ausdampfgefäß 30 vorherrschenden Druck entstehende Dampf wird über eine Leitung 36 gemeinsam mit der verdichteten Verdrängungsluft der Brennkammer 16 zugeführt. Die verbleibende Restmenge an heißem Kühlwasser wird vom ersten Ausdampfgefäß 30 dem zweiten Ausdampfgefäß 31 zugeleitet, dessen Druck gegenüber dem ersten Ausdampfgefäß 30 abgesenkt ist, so daß eine weitere Spontanverdampfung stattfinden kann, wobei aber der Druck noch beträchtlich oberhalb des Umgebungsdrucks liegt. Der hierbei entstehende Abdampf wird über eine Leitung 38 ebenfalls zur Erhöhung des Massedurchsatzes der Gasturbine 18 zugeführt und zwar durch Einspeisung in die Niederdruckstufe 18.2.

Die im zweiten Ausdampfgefäß 31 verbleibende Restmenge an heißem Kühlwasser wird dem dritten Ausdampfgefäß 32 zugeleitet, welches ebenfalls einen Innendruck oberhalb Umgebungsdruck aufweist. Der bei der hier erfolgenden Entspannung sich bildende Dampf wird einem Ejektor 34 zugeleitet, der seinerseits mit dem vierten Ausdampfgefäß 33 verbunden ist und dieses auf ein Druckniveau unterhalb Umgebungsdruck evakuiert. Der vom Ejektor 34 abströmende Dampf gelangt, wie bereits aus der Anordnung gemäß Fig. 1 bekannt, zum Abgasstrom der Gasturbine 18.

Die in dem vierten Ausdampfgefäß 33 verbleibende Restmenge an Kühlwasser wird über eine Leitung 28 der Förderpumpe 26 zugeführt, die über die besagte Leitung 22 den Kühler 14 speist. Über die Leitung 24 wird Zusatzwasser aus einem nicht näher gezeigten Reservoir zugeführt.

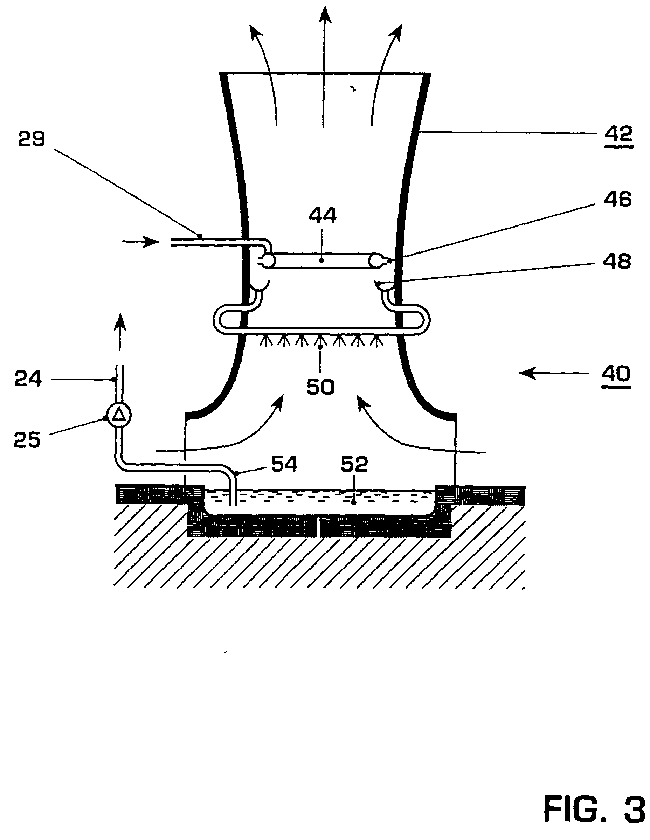

In Fig. 3 ist ein Verdunstungskühler 40 dargestellt, der in konventioneller Weise einen Kühlturm 42 aufweist. Im Inneren des Kühlturms 42 befindet sich eine Ringleitung 44, die mit einer Leitung 29 verbunden ist, über welche heißes Kühlwasser von einem nicht näher dargestellten Kühler einer ebenfalls nicht gezeigten Gasturbogruppe zugeführt wird und über an der Ringleitung 44 angeordnete Düsen 46 ausgedampft wird. Währenddem der entstandene Dampf über den Kühlturm nach oben abströmt, gelangt das Restwasser in die Rinne 48, von wo es in üblicher Weise die Brausen 50 der Verdunstungsanordnung beaufschlagt. Von da an arbeitet der Kühlturm in üblicher Weise. An Stelle der Brauseeinrichtung 50 könnte auch ein konvektives Kühlbündel treten. Das abgeregnete Wasser wird in einem Reservoir 52 aufgefangen und über eine Leitung 54 zu einer Pumpe 25 gefördert, die über eine Leitung 24 den bereits erwähnten, nicht näher gezeigten Kühler mit frischem Kühlwasser versorgt.

## Patentansprüche

1. Verfahren zum Betrieb eines aus mindestens zwei Verdichterstufen bestehenden Turboverdichters, mit einem dazwischen geschalteten Kühler, der von Wasser als Kühlmedium durchströmt wird, wobei das Wasser auf eine Temperatur grösser 100°C bei einem Druck oberhalb seines Sättigungsdruckes erhitzt und anschliessend entspannt wird, wobei ferner das hierdurch verdampfende Wasser durch Zusatzwasser ersetzt wird, und wobei die Entspannung mit einhergehender Ausdampfung in wenigstens zwei Stufen erfolgt, dadurch gekennzeichnet, dass in einer ersten Ausdampfflasche (30, 33) der Ausdampfdruck über-atmosphärisch gehalten wird, dass mindestens ein Teil der hierbei erzeugten Dampfmenge die Treibdüse eines Ejektors (34) beaufschlägt, welcher seinerseits eine zweite, mit dem Ejektor (34) in Wirkverbindung stehende Ausdampfflasche (32) evakuiert, und dass die Summe der in den Ausdampfflaschen erzeugten Dämpfe auf Atmosphärendruck gebracht werden.

2. Verfahren nach Anspruch 1, dadurch gekennzeichnet, dass der Turboverdichter (12) im Zusammenhang mit einer Gasturbogruppe (16, 18, 20) betrieben wird.

3. Verfahren nach den Ansprüchen 1 und 2, dadurch gekennzeichnet, dass der dem Ejektor (34) entströmende Abdampf dem Abgas der Gasturbogruppe zugemischt wird.

4. Verfahren nach den Ansprüchen 1 und 2, dadurch gekennzeichnet, dass ein Teil der durch die Entspannung des Kühlwassers erzeugten Dampfmenge (36, 38) in den Prozess der Gasturbogruppe eingespiesen wird.

5. Vorrichtung zur Durchführung des Verfahrens nach einem der Ansprüche 1-4, mit einem aus mindestens zwei Verdichterstufen bestehenden Turboverdichter, einem mit Wasser als Kühlmedium durchströmbaren, zwischen die Verdichterstufen geschalteten Kühler, mit mindestens einer Brennkammer, mindestens einer Turbine, mindestens einem Generator, mindestens einer ersten Ausdampfflasche, welche mit dem Kühler verbunden ist, und mit einer Zusatzwasser-Zuleitung zu dem mit dem Kühler verbundenen Kühlwasserkreislauf, gekennzeichnet durch einen Ejektor (34), der mit der Dampfseite der ersten Ausdampfflasche verbunden und mit mindestens einem Teil der Dampfmenge aus der ersten Ausdampfflasche (30, 32) betreibbar ist, und der derart in Wirkverbindung mit einer zweiten Ausdampfflasche (32) steht, dass diese vom Ejektor evakuiert wird.

6. Vorrichtung nach Anspruch 5, dadurch gekennzeichnet, dass die Ausdampfflaschen mit einem Verdunstungskühler (40) verbunden sind.

7. Vorrichtung nach Anspruch 6, dadurch gekennzeichnet, dass der Verdunstungskühler (40) als Kühlturm (42) ausgebildet ist.

8. Vorrichtung nach Anspruch 6, dadurch gekennzeichnet, dass der Verdunstungskühler (40) als Konvektivkühler ausgebildet ist.

## Claims

1. Method for operating a turbocompressor comprising at least two compressor stages, having a cooler which is connected between them through which water flows as coolant, the water being heated to a temperature higher than 100°C at a pressure above its saturation pressure and subsequently being depressurized, the water thereby evaporated being, furthermore, replaced by make-up water, and the depressurization being performed in at least two stages with attendant flashing into steam, characterized in that the exhaust steam pressure is kept above atmospheric pressure in a first flashing cylinder (30, 33), in that at least a portion of the quantity of steam thereby produced is applied to the drive nozzle of an ejector (34) which, for its part, evacuates a second flashing cylinder (32), which is operationally connected to the ejector (34), and in that the sum of the steams generated in the flashing cylinders is brought to atmospheric pressure.

2. Method according to Claim 1, characterized in that the turbocompressor (12) is operated in conjunction with a gas turbine group (16, 18, 20).

3. Method according to Claims 1 and 2, characterized in that the exhaust steam flowing from the ejector (34) is admixed with the exhaust gas of the gas turbine group.

4. Method according to Claims 1 and 2, characterized in that a portion of the quantity of steam (36, 38) generated by the depressurization of the cooling water is fed into the process of the gas turbine group.

5. Device for carrying out the method according to one of Claims 1-4, having a turbocompressor comprising at least two compressor stages, a cool through which water can flow as coolant and which is connected between the compressor stages, having at least one combustion chamber, at least one turbine, at least one generator, at least a first flashing cylinder, which is connected to the cooler, and having a make-up water feed line to the cooling water circuit connected to the cooler, characterized by an ejector (34) which is connected to the steam side of the first flashing cylinder and can be operated by means of at least a portion of the quantity of steam from the first flashing cylinder (30, 32), and which is operationally connected to a second flashing cylinder (32) in such a way that the latter is evacuated by the ejector.

6. Device according to Claim 5, characterized in that the flashing cylinders are connected to an evaporative cooler (40).

7. Device according to Claim 6, characterized in that the evaporative cooler (40) is constructed as a cooling tower (42).

8. Device according to Claim 6, characterized in that the evaporative cooler (40) is constructed as a convective cooler.

## Revendications

1. Procédé de conduite d'un turbocompresseur composé d'au moins deux étages de compresseur, avec un refroidisseur installé entre ceux-ci, qui est parcouru par de l'eau comme agent de refroidissement, l'eau étant échauffée à une température supérieure à 100°C avec une pression supérieure à sa pression de saturation et étant ensuite détendue, l'eau ainsi vaporisée étant en outre remplacée par de l'eau d'appoint, et la détente se produisant en au moins deux étages s'accompagnant d'une évaporation, caractérisé en ce que dans un premier ballon d'évaporation (30, 33) la pression d'évaporation est maintenue au-dessus de la pression atmosphérique, en ce qu'au moins une partie de la quantité de vapeur ainsi produite alimente la buse d'entraînement d'un éjecteur (34), qui pour sa part évacue un second ballon d'évaporation (32) se trouvant en communication avec l'éjecteur (34), et en ce que la somme des vapeurs produites dans les ballons d'évaporation est portée à la pression atmosphérique.

2. Procédé suivant la revendication 1, caractérisé en ce que le turbocompresseur (12) fonctionne en liaison avec un turbogroupe à gaz (16, 18, 20).

3. Procédé suivant les revendications 1 et 2, caractérisé en ce que la vapeur d'échappement sortant de l'éjecteur (34) est mélangée aux gaz d'échappement du turbogroupe à gaz.

4. Procédé suivant les revendications 1 et 2, caractérisé en ce qu'une partie de la quantité de vapeur (36, 38) produite par la détente de l'eau de refroidissement est introduite dans le processus du turbogroupe à gaz.

5. Dispositif pour la mise en oeuvre du procédé suivant l'une quelconque des revendications 1 à 4, avec un turbocompresseur composé d'au moins deux étages de compresseur, un refroidisseur pouvant être parcouru par de l'eau comme agent de refroidissement, installé entre les étages de compresseur, avec au moins une chambre de combustion, au moins une turbine, au moins un générateur, au moins un premier ballon d'évaporation, qui est raccordé au refroidisseur, et avec une conduite d'arrivée d'eau d'appoint vers le circuit d'eau de refroidissement raccordé au refroidisseur, caractérisé par un éjecteur (34), qui est raccordé au côté vapeur du premier ballon d'évaporation et qui peut fonctionner avec au moins une partie de la quantité de vapeur venant du premier ballon d'évaporation (30, 32), et qui est en communication active avec un second ballon d'évaporation (32) d'une façon telle que celui-ci soit évacué par l'éjecteur.

6. Dispositif suivant la revendication 5, caractérisé en ce que les ballons d'évaporation sont raccordés à un refroidisseur par évaporation (40).

7. Dispositif suivant la revendication 6, caractérisé en ce que le refroidisseur par évaporation (40) est constitué par une tour de refroidissement (42).

8. Dispositif suivant la revendication 6, caractérisé en ce que le refroidisseur par évaporation (40) est constitué par un refroidisseur par convection.
